(19) Europäisches Patentamt
European Patent Office
Office européen des brevets

(11) **EP 1 979 792 B1**

(12) **EUROPÄISCHE PATENTSCHRIFT**

(45) Veröffentlichungstag und Bekanntmachung des Hinweises auf die Patenterteilung:
**31.03.2010 Patentblatt 2010/13**

(21) Anmeldenummer: **07704045.9**

(22) Anmeldetag: **22.01.2007**

(51) Int Cl.:
**G05B 19/19** *(2006.01)*     **G05B 13/02** *(2006.01)*

(86) Internationale Anmeldenummer:
**PCT/EP2007/050577**

(87) Internationale Veröffentlichungsnummer:
**WO 2007/085578 (02.08.2007 Gazette 2007/31)**

(54) **VERFAHREN ZUM REGELN EINES ISTWERTES FÜR EINE EINE POSITION EINES STELLGLIEDES CHARAKTERISIERENDE GRÖßE, COMPUTERPROGRAMM-PRODUKT UND COMPUTERPROGRAMM**

METHOD FOR REGULATING AN ACTUAL VALUE OF A VARIABLE WHICH CHARACTERIZES A POSITION OF AN ACTUATOR, COMPUTER PROGRAM PRODUCT AND COMPUTER PROGRAM

PROCEDE POUR LE REGLAGE D'UNE VALEUR REELLE POUR UNE GRANDEUR CARACTERISANT UNE POSITION D'UN ELEMENT DE REGLAGE FINAL, PRODUIT DE PROGRAMME INFORMATIQUE ET PROGRAMME INFORMATIQUE

(84) Benannte Vertragsstaaten:
**DE FR**

(30) Priorität: **24.01.2006 DE 102006003251**

(43) Veröffentlichungstag der Anmeldung:
**15.10.2008 Patentblatt 2008/42**

(73) Patentinhaber: **Robert Bosch GmbH**
**70442 Stuttgart (DE)**

(72) Erfinder:
• **BUEHRLE, Ralf**
**71686 Hochberg (DE)**
• **COIS, Olivier**
**71272 Renningen (DE)**
• **LANUSSE, Patrick**
**F-33170 Gradignan (FR)**
• **OUSTALOUP, Alain**
**F-33400 Talence (FR)**
• **MELCHIOR, Pierre**
**F-33510 Andernos (FR)**
• **POTY, Alexandre**
**F-33000 Bordeaux (FR)**

(56) Entgegenhaltungen:
**EP-A- 1 217 472     US-A- 5 371 670**

• **DINGYU XUE ET AL: "A comparative introduction of four fractional order controllers" INTELLIGENT CONTROL AND AUTOMATION, 2002. PROCEEDINGS OF THE 4TH WORLD CONGRESS ON JUNE 10-14, 2002, PISCATAWAY, NJ, USA,IEEE, Bd. 4, 10. Juni 2002 (2002-06-10), Seiten 3228-3235, XP010594196 ISBN: 0-7803-7268-9**
• **PROCEEDINGS OF THE 23RD CHINESE CONTROL CONFERENCE 10-13 AUG. 2004 WUXI, CHINA, 13. August 2004 (2004-08-13), Seiten 1576-1580, XP009082626 Proceedings of the 23rd Chinese Control Conference East China Univ. of Sci. & Technol. Press China, China**
• **Nonlinear Dynamics Kluwer Academic Publishers Netherlands, Bd. 38, Nr. 1-4, 31. Dezember 2004 (2004-12-31), Seiten 461-484, XP002430530 ISSN: 0924-090X**
• **OUSTALOUP A ET AL: "The CRONE toolbox for matlab" COMPUTER-AIDED CONTROL SYSTEM DESIGN, 2000. CACSD 2000. IEEE INTERNATIONAL SYMPOSIUM ON 25-27 SEPTEMBER 2000, PISCATAWAY, NJ, USA,IEEE, 25. September 2000 (2000-09-25), Seiten 190-195, XP010528292 ISBN: 0-7803-6566-6**

- **CHENGBIN MA ET AL: "Fractional order control and its application of PI/spl alpha/D controller for robust two-inertia speed control" POWER ELECTRONICS AND MOTION CONTROL CONFERENCE, 2004. CONFERENCE PROCEEDINGS. IPEMC 2004. THE 4TH INTERNATIONAL XI'AN, CHINA AUG. 14-16, 2004, PISCATAWAY, NJ, USA,IEEE, Bd. 3, 14. August 2004 (2004-08-14), Seiten 1477-1482, XP010756053 ISBN: 7-5605-1869-9**

## Beschreibung

Stand der Technik

Die Erfindung geht von einem Verfahren zum Regeln eines Istwertes für eine eine Position eines Stellgliedes charakterisierende Größe, von einem Computerprogramm-Produkt, von einem Computerprogramm und von einem Aufzeichnungsträger nach der Gattung der unabhängigen Ansprüche aus.

Verfahren zum Regeln eines Istwertes für eine eine Position eines Stellgliedes charakterisierende Größe mittels eines Reglers auf einen Sollwert sind bereits hinlänglich bekannt. Dabei ist es auch bekannt, einen vorgegebenen zeitlichen Verlauf des Sollwertes in einen gewünschten zeitlichen Verlauf des Istwertes zu transformieren, wobei eine Übertragungsfunktion im Frequenzbereich zur Transformation des vorgegebenen zeitlichen Verlaufs des Sollwertes in den gewünschten zeitlichen Verlauf des Istwertes gebildet und durch einen oder mehrere Faktoren approximiert wird. Diese Faktoren sind dabei üblicher Weise Proportional-Zeit-Glieder (PT) ganzzahliger Ordnung, d. h. mit ganzzahligen Exponenten. Aus der Veröffentlichung "La commande CRONE, du scalaire au Multivariable, A. Oustaloup und B. Mathieu, Hermes, 1999" ist außerdem die Verwendung von CRONE-Reglern bekannt, die die Eigenschaften eines neuen mathematischen Operators ausnutzen, der das Konzept der Ableitungen nicht ganzzahliger Ordnung verallgemeinert.

Aus der Druckschrift "A Comparative Introduction of four Fractional Order Controllers, Dingyü Xue, Proceedings of the 4th World Congress on Intelligent Control and Automation, June 10-14, 2002, Shanghai, P.R. China" ist eine Übertragungsfunktion eines TID-Reglers bzw. eines CRONE-Reglers bekannt, der eine Übertragungsfunktion mit nicht ganzzahligem Exponenten offenbart.

Aus der US 5,371,670 ist ein TID-Regler mit nicht ganzzahligem Exponenten in der Übertragungsfunktion bekannt.

Die Druckschrift "An Introduction of Fractional Order Control and its Applications in Motion Control, Chengbin Ma, The Department of Electrical Engineering, The University of Tokyo" beschäftigt sich mit Reglerübertragungsfunktionen.

Offenbarung der Erfindung

Vorteile der Erfindung

Das erfindungsgemäße Verfahren zum Regeln eines Istwertes für eine eine Position eines Stellgliedes charakteristische Größe, das erfindungsgemäße Computerprogramm-Produkt, das erfindungsgemäße Computerprogramm und der erfindungsgemäße Aufzeichnungsträger mit den Merkmalen der unabhängigen Ansprüche haben demgegenüber den Vorteil, dass für mindestens einen der Faktoren der Übertragungsfunktion zur Transformation des vorgegebenen zeitlichen Verlaufs des Sollwertes in den gewünschten zeitlichen Verlauf des Istwertes ein nicht ganzzahliger Exponent gewählt wird.

Auf diese Weise stehen in Form des nicht ganzzahligen Exponenten des mindestens einen der Faktoren erheblich mehr Freiheitsgrade zur Verfügung als im Falle von Faktoren mit ausschließlich ganzzahligen Exponenten. Zudem kann die Zahl der erforderlichen Faktoren auf diese Weise minimiert und somit auch die Anzahl der erforderlichen Parameter der Übertragungsfunktion auf einem kleinstmöglichen Wert gehalten werden. Die Bildung der Übertragungsfunktion kann somit auch schneller und mit weniger Rechen- und Speicherplatzaufwand realisiert werden.

Die beschriebene Bildung oder Modellierung der Übertragungsfunktion im Frequenzbereich ermöglicht eine exzellente Regelleistung in Form eines optimalen Kompromisses zwischen Bandbreite, Stabilität, Genauigkeit und Robustheit der Regelung aufgrund des nicht ganzzahligen Exponenten des mindestens einen der Faktoren. Ferner weist die Übertragungsfunktion eine lineare Struktur auf, die es nicht erfordert, die Reglerparameter abhängig von Kennfeldern und Betriebsbedingungen zu adaptieren. Schließlich ist die zur Kalibrierung der Regelung erforderliche Dauer sehr kurz aufgrund der bereits erwähnten reduzierten Anzahl von Parametern sowie der linearen Eigenschaften der Übertragungsfunktion, die die Anwendung der linearen Regeltheorie während der Kalibrierung ermöglicht und somit wiederholte und zeitaufwendige Kalibrierungstests vermeiden hilft.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn ein Verlauf der ersten Übertragungsfunktion im Frequenzbereich bestimmt wird, wenn die so bestimmte erste Übertragungsfunktion durch ein oder mehrere Geradenstücke approximiert wird, für die jeweils ein das jeweilige Geradenstück abbildender Faktor der ersten Übertragungsfunktion bestimmt wird, wobei mindestens einer der Faktoren einen nicht ganzzahligen Exponenten aufweist. Auf diese Weise lässt sich die gewünschte erste Übertragungsfunktion im Frequenzbereich besonders einfach und wenig aufwendig in Form einer mathematischen Funktion abbilden.

Dazu kann der Verlauf der gewünschten ersten Übertragungsfunktion im Frequenzbereich in einfacher Weise zunächst numerisch bestimmt werden.

Vorteilhaft ist auch, wenn der Verlauf der gewünschten ersten Übertragungsfunktion in Form eines Bode-Diagramms bestimmt wird, das dann eine besonders einfache Umsetzung in den oder die Faktoren ermöglicht.

Besonders vorteilhaft ist es, wenn der vorgegebene Verlauf des Sollwertes in einen gewünschten Verlauf des Sollwertes mittels eines Filters transformiert wird und wenn eine zweite Übertragungsfunktion als Übertragungsfunktion des Filters durch Division der approximierten ersten Übertragungsfunktion durch die Übertragungsfunktion des Reglers und des Stellgliedes gebildet wird. Auf diese Weise lässt sich die gewünschte erste Übertragungsfunktion bei gegebenem Übertragungsverhalten des Reglers und des Stellgliedes besonders einfach mit Hilfe des Filters realisieren.

Besonders vorteilhaft ist es, wenn als Regler ein CRONE-Regler eingesetzt wird. Auf diese Weise lässt sich die gewünschte erste Übertragungsfunktion mit dem mindestens einen Faktor und dessen nicht ganzzahligen Exponenten besonders einfach umsetzen, weil auch der CRONE-Regler die Verwendung einer Übertragungsfunktion mit mindestens einem Faktor ermöglicht, dessen Exponent nicht ganzzahlig ist.

Zeichnung

Ein Ausführungsbeispiel der Erfindung ist in der Zeichnung dargestellt und in der nachfolgenden Beschreibung näher erläutert. Es zeigen:

Figur 1    ein Blockschaltbild einer Regelstrecke,
Figur 2    ein Blockschaltbild eines kompletten Regelsystems mit Vorfilter,
Figur 3    ein Bode-Diagramm eines gewünschten Verlaufs einer Amplitude einer Übertragungsfunktion im Frequenzbereich,
Figur 4    eine Approximation des gewünschten Verlaufs von Figur 3 durch ein PT1-Glied,
Figur 5    eine Approximation des gewünschten Verlaufs der Übertragungsfunktion von Figur 3 durch mehrere PTn-Glieder und
Figur 6    eine Approximation des gewünschten Verlaufs der Übertragungsfunktion von Figur 3 durch zwei PT-Glieder mit nicht ganzzahligen Exponenten.
Figur 7    zeigt einen Ablaufplan für einen beispielhaften Ablauf des erfindungsgemäßen Verfahrens.

Beschreibung des Ausführungsbeispiels

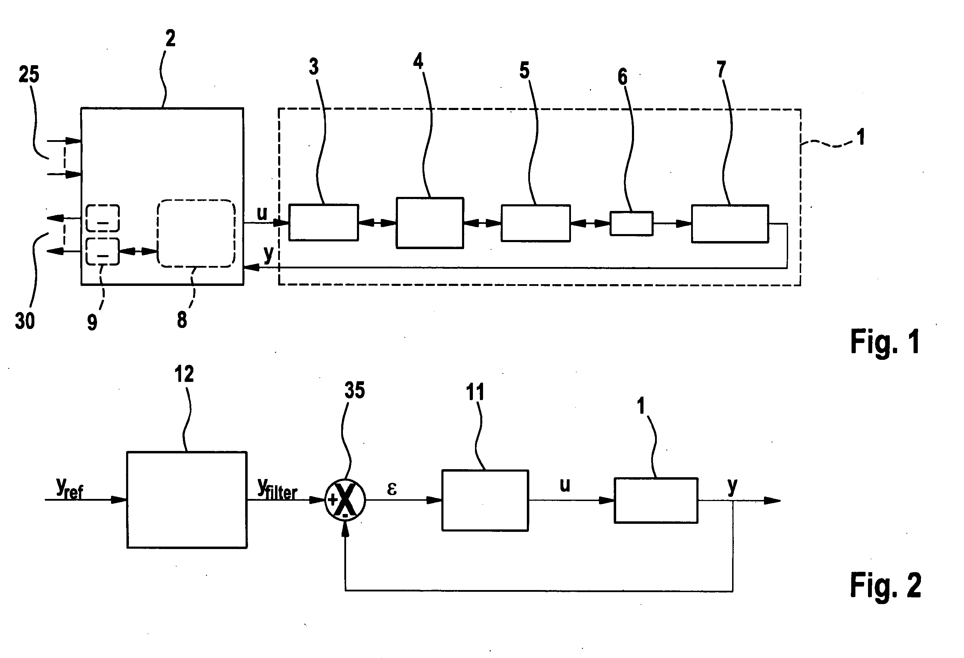

In Figur 1 ist ein Funktionsdiagramm zur Regelung der Position eines elektronischen Stellgliedes 1 einer Brennkraftmaschine dargestellt. Das elektronische Stellglied 1 wird beispielsweise zur Steuerung der Brennkraftmaschine eingesetzt und kann beispielsweise ein Drosselklappenventil, ein Abgasrückführventil, ein Wastegate-Ventil oder ein Stellglied zur Variation der Geometrie einer Turbine eines Abgasturboladers sein.

Das elektronische Stellglied 1 umfasst eine elektrische Drehmomentenquelle 4, die beispielsweise als Gleichstrommotor ausgebildet ist. Die elektrische Drehmomentenquelle 4 ist mit einem Leistungswandler 3 verbunden, der der elektrischen Drehmomentenquelle 4 die erforderliche elektrische Leistung gemäß einem Eingangssteuersignal u zur Verfügung stellt. Der Leistungswandler 3 kann beispielsweise als variable Spannungs- oder Stromquelle ausgebildet sein und insbesondere zur Abgabe eines pulsweitenmodulierten Spannungs- oder Stromsignals ausgelegt sein. Entsprechend entspricht das Eingangssteuersignal u einem Spannungswert U, einem Stromwert I oder einem Tastverhältnis $\alpha$. Die elektrische Drehmomentenquelle 4 steuert eine Last 6 in eine Rotations- oder in eine Translationsbewegung über ein kinematisches Übertragungsglied 5 an. Die Last 6 kann dabei beispielsweise die Klappe eines Drossel- oder eines Abgasrückführventils sein. Das kinematische Übertragungsglied 5 umfasst typischer Weise Getriebeelemente mit möglichen nicht linearen Eigenschaften, wie Haftreibung, Gleitreibung und/oder Coulomb-Reibung oder variable Übersetzungsverhältnisse. Das kinematische Übertragungsglied 5 kann auch eine Verknüpfung von mechanischen Federn umfassen, die die Last 6 zur Rückkehr in eine vorgegebene Position zwingen, wenn von der elektrischen Drehmomentenquelle kein Drehmoment vorgegeben wird. Eine Lagerückmeldung 7 ist mit der Last 6 verbunden und ermittelt einen Istwert Y für die Position der Last 6.

Das elektronische Stellglied 1 ist mit einer Steuervorrichtung 2 verbunden, die beispielsweise als mikroprozessorbasierte Antriebstrangsteuerung ausgebildet ist. Die Steuervorrichtung 2 empfängt den Istwert Y von der Lagerückmeldung 7 und gibt das Steuersignal u an den Leistungswandler 3 ab. Um die Position des elektrischen Stellgliedes 1 zu regeln, führt die Steuervorrichtung 2 einen Positionsregelalgorithmus 8 aus, der periodisch neue Werte des Steuersignals u abhängig von den empfangenen Istwertes y und einem vorgegebenen Sollwert $y_{ref}$ bestimmt. Der vorgegebene Sollwert $y_{ref}$ wird beispielsweise von einem Luftsystemmanagementalgorithmus 9 in dem Fachmann bekannter Weise, beispielsweise abhängig von einer Fahrpedalstellung, zur Verfügung gestellt. Der Luftsystemmanagementalgorithmus 9 ist gemäß dem Beispiel nach Figur 1 ebenfalls in der Steuervorrichtung 2 implementiert.

Der Positionsregelalgorithmus 8 und der Luftsystemmanagementalgorithmus 9 können software- und/oder hardwaremäßig in der Steuervorrichtung 2 oder auch in getrennten Steuervorrichtungen implementiert sein. Weitere Eingangs- und Ausgangsgrößen der Steuervorrichtung 2 sind in Figur 1 mit dem Bezugszeichen 25 bzw. 30 gekennzeichnet. Zu den Eingangsgrößen 25 gehört dabei beispielsweise die erwähnte Fahrpedalstellung sowie weitere Betriebsgrößen der Brennkraftmaschine, wie beispielsweise die Motordrehzahl und die Motorlast, beispielsweise in Abhängigkeit eines der Brennkraftmaschine zugeführten Luftmassenstroms oder eines Saugrohrdruckes. Die Ausgangsgrößen 30 der Steuervorrichtung 2 umfassen beispielsweise Größen zur Einstellung eines Zündzeitpunktes im Falle eines Ottomotors oder die Ansteuerung weiterer Ventile oder elektrischer Stellglieder, wie beispielsweise Abgasrückführventil, Wastgate-Ventil, Einspritzventil, usw., die gemäß dem beschriebenen Aufbau des elektrischen Stellgliedes 1 realisiert sein können.

Gemäß Figur 2 umfasst der Positionsregelagorithmus 8 ein Vorfilter 12, dem ein vorgegebener zeitlicher Verlauf des Sollwertes $y_{ref}$ zugeführt ist. Das Vorfilter 12 filtert den vorgegebenen zeitlichen Verlauf des Sollwertes $y_{ref}$ und gibt einen gefilterten zeitlichen Verlauf des Sollwertes $y_{filter}$ an seinem Ausgang ab. Anschließend wird in einem Verknüpfungspunkt 35 eine Regelabweichung $\varepsilon$ dadurch gebildet, dass vom gefilterten zeitlichen Verlauf des Sollwertes $y_{filter}$ der zeitliche Verlauf des Istwertes y abgezogen wird. Die Regelabweichung $\varepsilon$ wird dann einem Regler 11 zugeführt, der abhängig von der Regelabweichung $\varepsilon$ das Steuersignal u im Sinne einer Minimierung der Regelabweichung $\varepsilon$ ermittelt und an das elektronische Stellglied 1 abgibt. Der Regler 11 kann beispielsweise als P-Regler, I-Regler, D-Regler, PI-Regler, als PD-Regler, als PID-Regler oder in besonders vorteilhafter Weise als CRONE-Regler gemäß der Veröffentlichung "La commande CRONE, du scalaire au Multivariable, A. Oustaloup und B. Mathieu, Hermes, 1991, ausgebildet sein und im letzteren Fall mindestens einen Faktor der Übertragungsfunktion im Frequenzbereich mit nicht ganzzahligem Exponenten aufweisen. Im Folgenden soll beispielhaft angenommen werden, dass der Regler 11 als CRONE-Regler ausgebildet ist.

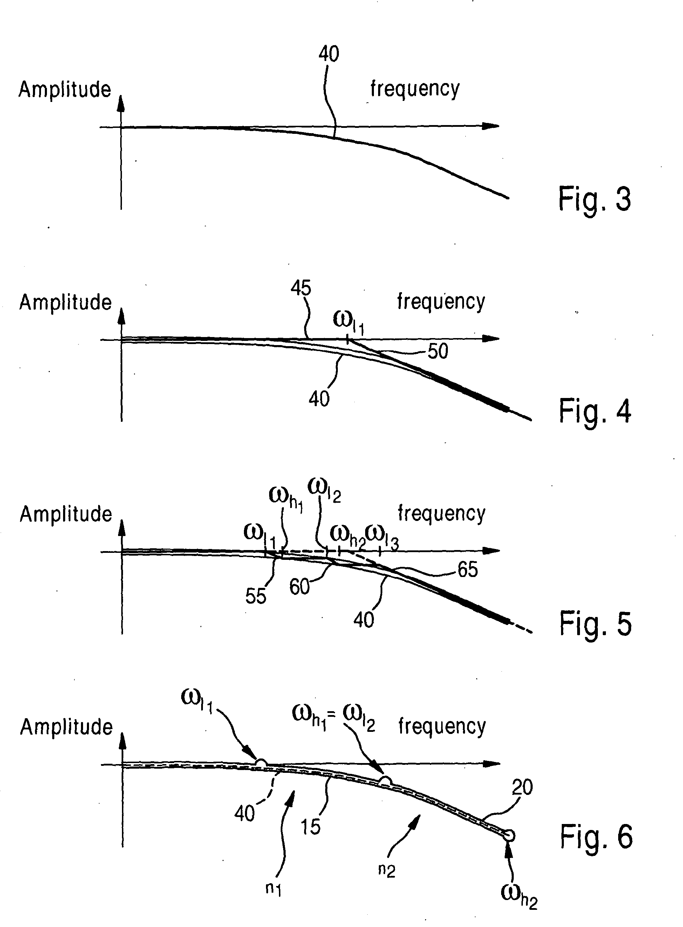

Bei der Realisierung eines Regelsystems mit Vorfilter 12, Verknüpfungsglied 35, Regler 11 und elektronischem Stellglied 1 wie in Figur 2 dargestellt, bildet man zunächst eine gewünschte erste Übertragungsfunktion im Frequenzbereich zur Transformation des vorgegebenen zeitlichen Verlaufs des Sollwertes $y_{ref}$ in einen gewünschten zeitlichen Verlauf des Istwertes y. Der dazu erforderliche Verlauf der gewünschten ersten Übertragungsfunktion im Frequenzbereich kann dabei beispielsweise mit Hilfe numerischer Approximationsverfahren, also nicht mathematisch analytisch, bestimmt werden. In vorteilhafter Weise kann der Verlauf der gewünschten ersten Übertragungsfunktion dabei in Form eines Bode-Diagramms wie in Figur 3 beispielhaft dargestellt bestimmt werden. Dort ist die Amplitude der gewünschten ersten Übertragungsfunktion über der Frequenz aufgetragen und mit dem Bezugszeichen 40 gekennzeichnet. Anschließend wird der in diesem Beispiel numerisch mittels des Bode-Diagramms ermittelte Verlauf der Amplitude der gewünschten ersten Übertragungsfunktion über der Frequenz durch eine mathematische Funktion angenähert. Dies geschah bislang beispielsweise unter Verwendung eines PT1-Gliedes (Proportional-Zeit-Glied erster Ordnung) wie es in Figur 4 dargestellt ist. Dabei wird der Verlauf 40 durch ein erstes Geradenstück 45 mit der Steigung 0 und ein zweites Geradenstück 50 mit negativer Steigung wie in Figur 4 dargestellt approximiert. Die negative Steigung des zweiten Geradenstücks 50 beträgt dabei im Beispiel nach Figur 4 in logarithmischer Darstellung 20dB/Dekade, so dass sich die gewünschte erste Übertragungsfunktion mathematisch analytisch angenähert durch die Übertragungsfunktion eines PT1-Gliedes wie folgt abbilden lässt:

$$H_{PT1} = \left( \frac{1}{1 + \dfrac{s}{\omega_{l_1}}} \right)^1 \tag{1}$$

In Gleichung (1) bezeichnet s die Laplace-Variable im Frequenzbereich und $\omega_{l_1}$ die untere Grenzfrequenz, bei der das zweite Geradenstück 50 im Frequenzbereich beginnt.

Eine bessere Approximation des Verlaufs 40 erhält man, wenn man gemäß Figur 5 die gewünschte Übertragungsfunktion mathematisch analytisch durch das Produkt der Übertragungsfunktionen mehrerer PT-Glieder n-ter Ordnung approximiert, wobei n ganzzahlig ist. So wird im Beispiel nach Figur 5 der Verlauf 40 durch drei Geradenstücke mit der Steigung 0 und drei Geradenstücke mit unterschiedlicher negativer Steigung approximiert. Gepunktet ist dabei in Figur 5 die gemäß Figur 4 durchgeführte Approximation mit dem PT1-Glied dargestellt. Durch Verwendung mehrerer Geradenstücke mit unterschiedlicher negativer Steigung lässt sich der Verlauf 40 besser approximierten als durch Verwendung lediglich des PT1-Gliedes nach Figur 4. Ein erstes Geradenstück mit negativer Steigung ist in Figur 5 mit dem Bezugszeichen 55 ein zweites Geradenstück mit negativer Steigung mit dem Bezugszeichen 60 und ein drittes Geradenstück mit negativer Steigung mit dem Bezugszeichen 65 gekennzeichnet. Das erste Geradenstück 55 weist eine negative Steigung mit dem Betrag von 20 dB/Dekade in logarithmischer Darstellung auf. Das zweite Geradenstück 60 weist eine negative Steigung mit dem Betrag von 40 dB/Dekade in logarithmischer Darstellung auf. Das dritte Geradenstück 65 weist eine negative Steigung mit dem Betrag von 20 dB/Dekade in logarithmischer Darstellung auf. Somit können das erste Geradenstück 55 und das dritte Geradenstück 65 jeweils durch ein PT1-Glied mathematisch analytisch abgebildet werden, wohingegen das zweite Geradenstück 60 durch ein PT2-Glied mathematisch analytisch abgebildet werden kann. Somit ergibt sich für die mathematisch analytisch approximierte Übertragungsfunktion des Verlaufs 40 gemäß Figur 5 die folgende Gleichung:

$$H_{PTn} = \prod_{k=1}^{K} \left( \frac{1+\dfrac{s}{\omega_{h_k}}}{1+\dfrac{s}{\omega_{l_k}}} \right)^{n_k} = \left( \frac{1+\dfrac{s}{\omega_{h_1}}}{1+\dfrac{s}{\omega_{l_1}}} \right)^{1} \left( \frac{1+\dfrac{s}{\omega_{h_2}}}{1+\dfrac{s}{\omega_{l_2}}} \right)^{2} \left( \frac{1+\dfrac{s}{\omega_{h_3}}}{1+\dfrac{s}{\omega_{l_3}}} \right)^{1} \qquad (2).$$

K ist die Anzahl der Faktoren in Gleichung (2) und in diesem Beispiel ist K = 3. $n_k$ ist die ganzzahlige Ordnung des jeweiligen Faktors.

Dabei ist $\omega_{l_1}$ die untere Grenzfrequenz des ersten Geradenstücks 55 und $\omega_{h_1}$ die obere Grenzfrequenz des ersten Geradenstücks 55. $\omega_{l_2}$ ist die untere Grenzfrequenz des zweiten Geradenstücks 60 und $\omega_{h_2}$ ist die obere Grenzfrequenz des zweiten Geradenstücks 60. $\omega_{l_3}$ ist die untere Grenzfrequenz des dritten Geradenstücks 65 und $\omega_{h_3}$ ist die obere Grenzfrequenz des dritten Geradenstücks 65.

Gemäß den Figuren 4 und 5 ist zu erkennen, dass mit ganzzahligen Exponenten der Faktoren der mathematisch analytisch approximierten Übertragungsfunktionen $H_{PT1}$ bzw. $H_{PTn}$ nur Geradenstücke mit einer Steigung von ganzzahligen Vielfachen des Wertes 20 dB/Dekade in logarithmischer Darstellung erzielt werden können. Je näher die mathematisch analytische Approximation an den Verlauf 40 sein soll, umso mehr PTn-Glieder sind erforderlich.

Erfindungsgemäß ist es deshalb vorgesehen, gemäß Figur 6 den Verlauf 40 neben einem Geradenstück mit der Steigung 0 noch mit zwei weiteren Geradenstücken negativer Steigung anzunähern, die den Verlauf 40 möglichst optimal nachbilden. Diese Approximation ist besser als die Approximation nach Figur 5 und weist dennoch weniger Geradenstücke auf. Dies liegt daran, dass die Geradenstücke 15, 20 mit negativer Steigung jeweils einen Steigungswert aufweisen, der kein ganzzahliges Vielfaches von 20 dB/Dekade ist. Entsprechend ergeben sich auch keine ganzzahligen Exponenten für die Faktoren der gemäß Figur 6 mathematisch analytisch approximierten gewünschten ersten Übertragungsfunktion. Vielmehr können diese Exponenten jeweils eine rationale, nicht zwingender Weise ganze Zahl annehmen. Somit ergibt sich beim Beispiel nach Figur 6 für die mathematisch analytische Approximation der gewünschten Übertragungsfunktion folgende Gleichung:

$$H_{PT\ fractional} = \prod_{k=1}^{K} \left( \frac{1+\dfrac{s}{\omega_{h_k}}}{1+\dfrac{s}{\omega_{l_k}}} \right)^{n_k} = \left( \frac{1+\dfrac{s}{\omega_{h_1}}}{1+\dfrac{s}{\omega_{l_1}}} \right)^{n_1} * \left( \frac{1+\dfrac{s}{\omega_{h_2}}}{1+\dfrac{s}{\omega_{l_2}}} \right)^{n_2} \qquad (3).$$

Dabei ist K ist die Anzahl der Faktoren in Gleichung (3), also K = 2. $n_k$ ist der rationalteilige Ordnung des jeweiligen Faktors. $\omega_{l_1}$ ist die untere Grenzfrequenz eines ersten Geradenstückes 15 mit negativer Steigung zur Approximation des Verlaufs 40 gemäß Figur 6 und $\omega_{h_1}$ ist die obere Grenzfrequenz des ersten Geradenstücks 15. $\omega_{l_2}$ ist die untere Grenzfrequenz eines zweiten Geradenstücks 20 mit negativer Steigung zur Approximation des Verlaufs 40 gemäß Figur 6 und $\omega_{h_2}$ ist die obere Grenzfrequenz des zweiten Geradenstücks 20.

Somit ist der Faktor mit dem Exponenten $n_1$ in Gleichung (3) dem ersten Geradenstück 15 und der Faktor mit dem Exponenten $n_2$ dem zweiten Geradenstück 20 zugeordnet. Zwischen dem Exponenten $n_k$ und der Steigung des zugeordneten Geradenstücks in logarithmischer Darstellung besteht ein linearer Zusammenhang. So ist beispielsweise $n_k$ = 0,5 bei einem Betrag der negativen Steigung des zugeordneten Geradenstück von 10 dB/Dekade. Der Exponent $n_k$ ist gleich 0,25 bei einem Betrag der negativen Steigung des zugeordneten Geradenstücks von 5 dB/Dekade. Der Exponent $n_k$ ist gleich 0,75 bei einem Betrag der negativen Steigung des zugeordneten Geradenstücks von 15 dB/Dekade. Ganzzahlige Vielfache von 20 dB/Dekade für den Betrag der negativen Steigung eines Geradenstücks werden wie auch in den Figuren 4 und 5 jeweils durch einen ganzzahligen Exponenten zum Ausdruck gebracht. $H_{PT\,fractional}$ ist somit die mathematisch analytische Annäherung der gewünschten ersten Übertragungsfunktion zwischen dem vorgegebenen zeitlichen Verlauf des Sollwertes $y_{ref}$ und dem gewünschten zeitlichen Verlauf des Istwertes y. Im Vergleich zur Funktion $H_{PTn}$ und zur Funktion $H_{PT1}$ gemäß den Figuren 4 und 5 liegt die Funktion $H_{PT\,fractional}$ erheblich näher am gewünschten Verlauf 40 und erfordert zumindest im Vergleich zur Funktion $H_{PTn}$ erheblich weniger Parameter. Durch die Verwendung von Proportional-Zeit-Gliedern mit rationalen nicht zwingend ganzzahligen Exponenten in der Funktion $H_{PT\,fractional}$ ergeben sich unendlich viel mehr Freiheitsgrade im Vergleich zu jeder beliebigen Funktion $H_{PTn}$ mit ausschließlich ganzzahligen Exponenten. Außerdem kommt die Funktion $H_{PT\,fractional}$ bei gleicher Annäherung an den gewünschten Verlauf 40 mit einer erheblich geringeren Anzahl K an Faktoren und damit auch einer erheblich geringeren Anzahl von Parametern $n_k$, $\omega_{l_k}$ und $\omega_{h_k}$ mit k = 1, ..., K aus, als eine mathematisch analytische Übertragungsfunktion mit nur ganzzahligen Exponenten.

Die Parameter $n_k$, $\omega_{l_k}$ und $\omega_{h_k}$ mit k = 1, ..., K der mathematisch analytischen Übertragungsfunktion $H_{PT\,fractional}$ nach Gleichung (3) werden wie beschrieben im Frequenzbereich mittels des Bode-Diagramms nach Figur 6 bestimmt. In Abhängigkeit der physikalischen Randbedingungen des gesamten in Figur 2 dargestellten Regelsystems müssen die Parameter $n_k$, $\omega_{l_k}$ und/oder $\omega_{h_k}$ jedoch noch weiter modifiziert werden. Diese physikalischen Randbedingungen können beispielsweise Grenzwerte für die maximal zulässige Spannung oder den maximal zulässigen Strom zur Ansteuerung der elektrischen Drehmomentenquelle 4 umfassen. So müssen die Parameter $n_k$, $\omega_{l_k}$ und/oder $\omega_{h_k}$ ggf. abhängig von dem physikalischen Verhalten des elektronischen Stellgliedes 1 im Frequenzbereich weiter modifiziert werden, um insbesondere die physikalischen Randbedingungen des Regelsystems hinsichtlich Leistung und Robustheit erfüllen zu können.

Dies kann unter Umständen auf Kosten der Genauigkeit der Approximation des Verlaufs 40 durch die mathematisch analytische Funktion gemäß Gleichung (3) gehen. Gemäß Gleichung (3) kann die mathematisch analytisch den Verlauf der gewünschten ersten Übertragungsfunktion approximierende Übertragungsfunktion einen oder mehrere Faktoren aufweisen, je nachdem wie viele Geradenstücke mit einer Steigung ungleich Null zur Approximation des Verlaufs 40 verwendet werden, wobei K die Anzahl dieser Geradenstücke bezeichnet und somit ganzzahlige Werte größer oder gleich 1 annehmen kann. Erfindungsgemäß umfasst dabei die mathematisch analytisch gewonnene Übertragungsfunktion $H_{PT\,fractional}$ gemäß Gleichung (3) mindestens einen Faktor mit nicht ganzzahligen Exponenten.

Im Folgenden geht es um die Dimensionierung des Vorfilters 12. Dazu wird zunächst die Übertragungsfunktion des Vorfilters 12 bestimmt, die im Folgenden auch als zweite Übertragungsfunktion bezeichnet wird. Sie transformiert den vorgegebenen zeitlichen Verlauf des Sollwertes $y_{ref}$ in den gewünschten gefilterten zeitlichen Verlauf des Sollwertes $y_{filter}$. Ausgehend von der Übertragungsfunktion $H_{PT\,frational}$ gemäß Gleichung (3) wird die zweite Übertragungsfunktion $F_{fractional}$ aus der Übertragungsfunktion $H_{PT\,fractional}$ der Gleichung (3) wie folgt gewonnen:

$$\dot{F}_{fractional} = \left( \frac{H_{PTfractional}}{T} \right)$$

$$(4).$$

Dabei ist T die Übertragungsfunktion des Reglers 11 und des elektronischen Stellgliedes 1 im Frequenzbereich und wird in dem Fachmann bekannter Weise ermittelt. Somit ist $F_{fractional}$ gemäß Gleichung (4) die Übertragungsfunktion des Vorfilters 12 im Frequenzbereich. Anschließend wird die zweite Übertragungsfunktion $F_{fractional}$ in dem Fachmann bekannter Weise in den Zeitbereich zurück transformiert und zur Implementierung in ein Steuergeräteprogramm der Steuervorrichtung 2 in eine zeitdiskrete Übertragungsfunktion $F_z(z)$ im Zeitbereich gemäß der folgenden Form transformiert:

$$F_z(z) = \frac{\sum_{k=0}^{N_{num}} b_k z^{-k}}{\sum_{k=0}^{N_{den}} a_k z^{-k}}$$

$$(5).$$

Dabei ist z die diskrete Zeitvariable und $a_k$, $b_k$, $N_{den}$, $N_{num}$ sind die durch die beschriebene Transformation sich ergebenden Parameter der zeitdiskreten Übertragungsfunktion $F_z$ (z). Die beschriebene Rücktransformation von der zweiten Übertragungsfunktion $F_{fractional}$ der Gleichung (4) in die zeitdiskrete Übertragungsfunktion $F_z$ (z) gemäß Gleichung (5) ist nicht immer mathematisch analytisch möglich, so dass ggf. eine Näherungslösung für diese Rücktransformation gefunden werden muss, die in dem Fachmann bekannter Weise mit Hilfe des Bode-Diagramms im Frequenzbereich durchgeführt werden kann.

Für den erfindungsgemäßen Fall, in dem mindestens einer der Faktoren der Übertragungsfunktion $H_{PT\ fractional}$ gemäß Gleichung (3) einen nicht ganzzahligen Exponenten aufweist, ergibt sich in aller Regel auch die zweite Übertragungsfunktion $F_{fractional}$ gemäß Gleichung (4) mit mindestens einem Faktor mit nicht ganzzahligem Exponenten. Wenn zudem der Regler als CRONE-Regler ausgebildet ist, dessen als dritte Übertragungsfunktion bezeichnete Übertragungsfunktion ebenfalls mindestens einen Faktor mit nicht ganzzahligem Exponenten aufweist, so lässt sich das Regelsystem nach Figur 2 mit maximaler Anzahl von Freiheitsgraden bei minimaler Anzahl von Parametern hinsichtlich größtmöglicher Bandbreite, Stabilität, Genauigkeit und Robustheit optimal und mit geringst möglichen Zeit- und Speicherplatzaufwand einstellen.

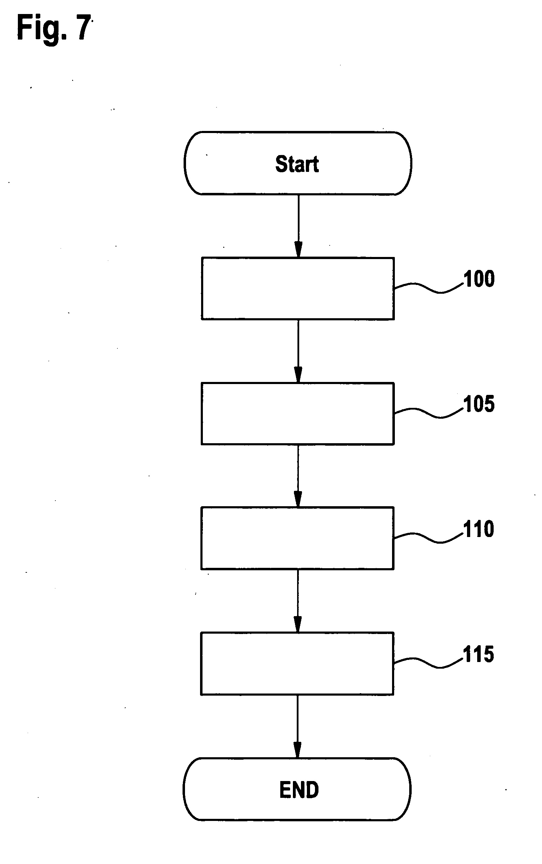

In Figur 7 ist ein Ablaufplan für einen beispielhaften Ablauf des erfindungsgemäßen Verfahrens dargestellt. Nach dem Start des Programms wird bei einem Programmpunkt 100 in der beschriebenen Weise der Verlauf der gewünschten ersten Übertragungsfunktion im Frequenzbereich beispielsweise mittels eines Bode-Diagramms und durch numerische Approximation mit der Maßgabe der Umformung des vorgegebenen zeitlichen Verlaufs des Sollwertes $y_{ref}$ in den gewünschten zeitlichen Verlauf des Istwertes y ermittelt. Anschließend wird zu einem Programmpunkt 105 verzweigt.

Bei Programmpunkt 105 wird gemäß der zur Figur 6 beschriebenen Vorgehensweise aus dem gewünschten Verlauf 40 der Amplitude der Übertragungsfunktion im Frequenzbereich die mathematisch analytische Übertragungsfunktion $H_{PT\ fractional}$ gemäß Gleichung (3) ermittelt.

Anschließend wird zu einem Programmpunkt 110 verzweigt.

Bei Programmpunkt 110 wird aus der Übertragungsfunktion $H_{PT\ fractional}$ und der in dem Fachmann bekannten Weise ermittelten Übertragungsfunktion T des Reglers 11 und des elektrischen Stellgliedes 1 gemäß Gleichung (4) die zweite Übertragungsfunktion $F_{fractional}$ ermittelt. Anschließend wird zu einem Programmpunkt 115 verzweigt.

Bei Programmpunkt 115 wird die zweite Übertragungsfunktion $F_{fractional}$ der Gleichung (4) in der beschriebenen Weise ggf. durch Approximation mit Hilfe des Bode-Diagramms im Frequenzbereich in die zeitdiskrete Übertragungsfunktion $F_z$ (z) gemäß Gleichung (5) transformiert, die dann in einem Steuergeräteprogramm der Steuervorrichtung 2 software- und/oder hardwaremäßig implementiert sein kann.

Anschließend wird das Programm verlassen.

Der Ablauf des erfindungsgemäßen Verfahrens kann beispielsweise programmcode-gesteuert mittels eines Computerprogramms durchgeführt werden, das sämtliche Schritte des Ablaufplans nach Figur 7 durchführt, wenn das Computerprogramm in einem Computer wie beispielsweise einem Mikroprozessor der Steuervorrichtung 2 ausgeführt wird. Zu diesem Zweck kann der Programmcode auch auf einem maschinenlesbaren Träger oder Aufzeichnungsträger gespeichert sein und somit ein Computerprogramm-Produkt bilden. Der maschinenlesbare Träger oder Aufzeichnungsträger kann dabei fest in der Steuervorrichtung 2 angeordnet oder mittels eines Laufwerkes der Steuervorrichtung zum Auslesen und Durchführen aller Schritte des Programmcodes von außen zugeführt werden.

Das erfindungsgemäße Verfahren kann beispielsweise im Steuergerät einer Brennkraftmaschine, beispielsweise eines Ottomotors oder eines Dieselmotors zur Anwendung kommen.

Das Prinzip der fraktionalen Differenziation, auf dem die vorliegende Erfindung basiert, ist durch folgende Schutzrechte der Ècole Nationale Supérieure d'Électronique, Informatique et Radiocommunicacion de Bordeaux (ENSEIRB) beim französischen Institut für geistiges Eigentum geschützt:

     Nr. 78.357.28 vom 14.12.1978
     Nr. 90.046.13 vom 30.03.1990
     Nr. 96.640.468 vom 28.08.1996.

Ferner durch folgende Schutzrechte der ENSEIRB, die bei der französischen Agentur für den Schutz von Programm (APP) registriert sind:

     Nr. 93.30.006.00 vom 28.07.1993
     (IDDN.FR.001.300006.00.R.P.1993.000.00000)
     Nr. 94.11.015.00 vom 16.03.1994 (IDDN.FR.001.11001
     5.00.R.P.1994.000.00000).

**Patentansprüche**

1. Verfahren zur Bildung einer ersten Übertragungsfunktion zur Transformation eines vorgegebenen zeitlichen Verlaufes eines Sollwertes in einen gewünschten zeitlichen Verlauf eines Istwertes unter Verwendung eines Reglers (11) zum Regeln des Istwertes für eine eine Position eines Stellgliedes (1) charakterisierende Größe auf den Sollwert, wobei die erste Übertragungsfunktion im Frequenzbereich zur Transformation des vorgegebenen zeitlichen Verlaufs des Sollwertes in den gewünschten zeitlichen Verlauf des Istwertes gebildet und durch einen oder mehrere Faktoren, insbesondere Proportional-Zeit-Glieder, approximiert wird, wobei für mindestens einen der Faktoren ein nicht ganzzahliger Exponent gewählt wird und der vorgegebene Verlauf des Sollwertes in einen gewünschten Verlauf des Sollwertes mittels eines Filters (12) transformiert wird, **dadurch gekennzeichnet, dass** eine zweite Übertragungsfunktion mit mindestens einem Faktor mit nicht ganzzahligem Exponenten als Übertragungsfunktion des Filters (12) durch Division der approximierten ersten Übertragungsfunktion durch die Übertragungsfunktion des Reglers (11) und des Stellgliedes (1) gebildet wird.

2. Verfahren nach Anspruch 1, **dadurch gekennzeichnet, dass** ein Verlauf der ersten Übertragungsfunktion im Frequenzbereich bestimmt wird, dass die so bestimmte erste Übertragungsfunktion durch ein oder mehrere Geradenstücke (15, 20) in logarithmischer Darstellung approximiert wird, für die jeweils ein das jeweilige Geradenstück (15, 20) abbildender Faktor der ersten Übertragungsfunktion bestimmt wird, wobei mindestens einer der Faktoren einen nicht ganzzahligen Exponenten aufweist.

3. Verfahren nach Anspruch 2, **dadurch gekennzeichnet, dass** der Verlauf der ersten Übertragungsfunktion im Frequenzbereich numerisch bestimmt wird.

4. Verfahren nach Anspruch 2 oder 3, **dadurch gekennzeichnet, dass** der Verlauf der ersten Übertragungsfunktion in Form eines Bode-Diagramms bestimmt wird.

5. Verfahren nach einem der vorherigen Ansprüche, **dadurch gekennzeichnet, dass** als Regler (11) ein CRONE-Regler eingesetzt wird.

6. Verfahren nach Anspruch 5, **dadurch gekennzeichnet, dass** eine dritte Übertragungsfunktion als Übertragungsfunktion des CRONE-Reglers (11) mit mindestens einem Faktor, der einen nicht ganzzahligen Exponenten aufweist, gewählt wird.

7. Computerprogramm-Produkt mit Programmcode, der auf einem maschinenlesbaren Träger gespeichert ist, zur Durchführung des Verfahrens nach einem der Ansprüche 1 bis 6, wenn das Programm auf einem Computer ausgeführt wird.

8. Computerprogramm mit Programmcode zur Durchführung aller Schritte nach einem der Ansprüche 1 bis 6, wenn das Programm in einem Computer ausgeführt wird.

**Claims**

1. Method for forming a first transfer function for transforming a prescribed time profile of a desired value into a desired time profile of an actual value by using a controller (11) for regulating the actual value of a variable characterizing a position of an actuator (1) to the desired value, the first transfer function being formed in the frequency domain in order to transform the prescribed time profile of the desired value into the desired time profile of the actual value, and being approximated by one or more factors, in particular proportional time elements, a non-integral exponent being selected for at least one of the factors, and the prescribed profile of the desired value being transformed into a desired profile of the desired value by means of a filter (12), **characterized in that** a second transfer function having at least one factor with non-integral exponents is formed as transfer function of the filter (12) by division of the approximated first transfer function by the transfer function of the controller (11) and the actuator (1).

2. Method according to Claim 1, **characterized in that** a profile of the first transfer function is determined in the frequency domain and **in that** the first transfer function thus determined is approximated by one or more straight line segments (15, 20) in a logarithmic representation, for which in each case a factor of the first transfer function that images the respective straight line segment (15, 20) is determined, at least one of the factors having a non-integral exponent.

3. Method according to Claim 2, **characterized in that** the profile of the first transfer function in the frequency domain is determined numerically.

4. Method according to Claim 2 or 3, **characterized in that** the profile of the first transfer function is determined in the form of a Bode diagram.

5. Method according to one of the preceding claims, **characterized in that** a CRONE computer is used as controller (11).

6. Method according to Claim 5, **characterized in that** a third transfer function is selected as transfer function of the CRONE controller (11) with at least one factor that has a non-integral exponent.

7. Computer program product having program code, which is stored on a machine-readable medium for carrying out the method according to one of Claims 1 to 6 when the program is executed on a computer.

8. Computer program having program code for carrying out all the steps according to one of Claims 1 to 6 when the program is executed in a computer.

**Revendications**

1. Procédé pour la création d'une première fonction de transfert pour la transformation de l'évolution temporelle définie d'une valeur de consigne en une évolution temporelle souhaitée d'une valeur réelle en utilisant un régulateur (11) pour régler la valeur réelle d'une grandeur caractérisant une position d'un actionneur (1) sur la valeur de consigne, dans lequel on crée la première fonction de transfert dans le domaine fréquentiel pour la transformation de l'évolution temporelle définie de la valeur de consigne en l'évolution temporelle souhaitée de la valeur réelle et on approxime au moyen d'un ou plusieurs facteurs, notamment des éléments temporels proportionnels, dans lequel on choisit un exposant non entier pour au moins un des facteurs et on transforme l'évolution définie de la valeur de consigne en évolution souhaitée de la valeur de consigne au moyen d'un filtre (12), **caractérisé en ce qu'**on crée une deuxième fonction de transfert avec au moins un facteur dont l'exposant n'est pas entier comme fonction de transfert du filtre (12) au moyen de la division de la première fonction de transfert approximée par la fonction de transfert du régulateur (11) et de l'actionneur (1).

2. Procédé selon la revendication 1, **caractérisé en ce qu'**on définit une évolution de la première fonction de transfert dans le domaine fréquentiel, **en ce que** la première fonction de transfert ainsi définie est approximée au moyen d'une ou de plusieurs parties droites (15, 20) en représentation logarithmique, pour lesquelles on définit un facteur représentant respectivement la partie droite (15, 20) de la première fonction de transfert, un au moins des facteurs comportant un exposant non entier.

3. Procédé selon la revendication 2, **caractérisé en ce que** l'évolution de la première fonction de transfert est définie numériquement dans le domaine fréquentiel.

4. Procédé selon la revendication 2 ou 3, **caractérisé en ce que** l'évolution de la première fonction de transfert est définie sous la forme d'un diagramme de Bode.

5. Procédé selon une des revendications précédentes, **caractérisé en ce qu'**on met en oeuvre un régulateur CRONE comme régulateur (11).

6. Procédé selon la revendication 5, **caractérisé en ce qu'**on choisit une troisième fonction de transfert comme fonction de transfert du régulateur CRONE (11) avec au moins un facteur comportant un exposant non entier.

7. Produit logiciel pour ordinateur avec un code de programme stocké sur un support lisible par la machine, pour l'exécution du procédé selon une des revendications 1 à 6 lorsqu'on exécute le logiciel dans un ordinateur.

8. Produit logiciel pour ordinateur avec un code de programme pour l'exécution de toutes les étapes selon une des revendications 1 à 6 lorsqu'on exécute le logiciel dans un ordinateur.

EP 1 979 792 B1

25

2

3  4  5  6  7

1

u

y

30  9  8

**Fig. 1**

12  35  11  1

$y_{ref}$  $y_{filter}$  ε  u  y

**Fig. 2**

Fig. 3

Fig. 4

Fig. 5

Fig. 6

# Fig. 7

```
        ┌─────────────────┐
        │      Start       │
        └─────────────────┘
                 │
                 ▼
        ┌─────────────────┐
        │                  │ ～ 100
        └─────────────────┘
                 │
                 ▼
        ┌─────────────────┐
        │                  │ ～ 105
        └─────────────────┘
                 │
                 ▼
        ┌─────────────────┐
        │                  │ ～ 110
        └─────────────────┘
                 │
                 ▼
        ┌─────────────────┐
        │                  │ ～ 115
        └─────────────────┘
                 │
                 ▼
        ┌─────────────────┐
        │       END        │
        └─────────────────┘
```

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5371670 A

### In der Beschreibung aufgeführte Nicht-Patentliteratur

- **Dingyü Xue.** A Comparative Introduction of four Fractional Order Controllers. *Proceedings of the 4th World Congress on Intelligent Control and Automation,* 10. Juni 2002